# FASCICULE DE BREVET EUROPEEN

(11) **EP 0 506 510 B1**
(45) Date de publication et mention de la délivrance du brevet: **26.10.1994**
(21) Numéro de dépôt: 92400693.5
(22) Date de dépôt: 16.03.1992
(51) Int. Cl.: B64C 27/00, F16F 7/10

(54) **Dispositif de transmission d'efforts statiques et de filtrage d'excitations vibratoires entre deux pièces**
Vorrichtung um statische Spannungen zu übertragen und Schwingungen zwischen zwei Teilen zu dämpfen
Device for reacting to static stresses and to dampen vibrations between two parts

(30) Priorité: 25.03.1991 FR 9103582
(43) Date de publication de la demande: 30.09.1992
(73) Titulaire: EUROCOPTER FRANCE, F-13725 Marignane Cédex (FR)
(72) Inventeur: Bietenhader, Claude, F-13410 Lambesc (FR); Blanc, Maurice, F-13150 Eguilles (FR)
(74) Mandataire: Bonnetat, Christian

(56) Documents cités:
- US-A- 3 288 419
- US-A- 4 403 681

## Description

La présente invention concerne un dispositif de liaison élastique entre deux pièces pour transmettre de l'une à l'autre les efforts statiques dans l'axe du dispositif et simultanément filtrer les excitations vibratoires coaxiales associées qui sont transmises de l'une à l'autre.

Plus particulièrement, quoique non exclusivement, un tel dispositif peut être utilisé dans la suspension reliant la boîte de transmission principale au fuselage d'un aéronef à voilure tournante, tel qu'un hélicoptère, pour filtrer les vibrations engendrées par le rotor et transmises au fuselage dudit aéronef par ladite boîte de transmission.

On connaît, notamment par le brevet FR-2 499 505, un tel dispositif, dénommé ci-après "isolateur", intégré dans la suspension reliant la boîte de transmission principale et le fuselage d'un hélicoptère. La suspension décrite dans le document cité ci-dessus comprend, d'une part, une membrane de reprise de la réaction au couple moteur, souple axialement et rigide radialement, disposée sous la boîte de transmission principale au niveau de la structure supérieure du fuselage et, d'autre part, des barres de transmission des efforts, issus du rotor, et des isolateurs à action unidirectionnelle situés dans un plan parallèle au fuselage. Chaque isolateur présente, comme cela est usuel, deux fonctions : une fonction "raideur" et une fonction "antirésonance". Dans ce cas, la fonction raideur est assurée par une lame souple reliée, d'une part, au fuselage et, d'autre part, au fond de la boîte de transmission principale. Par ailleurs, chaque barre est reliée à la lame respective à l'extrémité libre de cette dernière, extérieure aux appuis de la lame précités. La fonction antirésonance est assurée, quant à elle, par une masse disposée à une extrémité d'un bras de levier dont l'autre extrémité est reliée à la lame souple.

Cependant, l'existence d'un tel bras de levier implique, pour un isolateur à amplification mécanique de ce type, un encombrement important, ce qui restreint l'amplification possible en restant dans des limites raisonnables soit d'encombrement, soit de masse.

Pour éviter cet inconvénient, on connaît un isolateur utilisant un "levier liquide", c'est-à-dire un dispositif dans lequel un liquide de faible viscosité agit comme un levier augmentateur de course sur un arbre et une masse solidaires d'un ressort. Plus précisément, un dispositif de ce type, décrit dans le brevet FR-2 629 545, comporte un cylindre extérieur solidaire du fuselage d'un aéronef à voilure tournante, à son extrémité inférieure, et un cylindre intérieur solidaire, à son extrémité supérieure, de la boîte de transmission principale, un palier en élastomère entre les deux cylindres assurant la fonction raideur. La partie centrale du cylindre intérieur et deux arbres creux servent de guidage à une masse, montée coulissante sur lesdits arbres, et sont remplis d'huile de faible viscosité. La variation de volume des chambres situées aux extrémités du cylindre intérieur entraîne le déplacement de la masse avec une course amplifiée en permettant ainsi d'assurer la fonction antirésonance. Toutefois, un tel isolateur à amplification hydraulique de course n'est pas non plus dépourvu d'inconvénients. En effet, la raideur de l'élastomère a tendance à varier avec la température et au cours du temps. Par ailleurs, l'huile de faible viscosité risque de fuir, tandis que le plein d'huile est difficile à obtenir sans système de purge. On pourrait citer d'autres difficultés liées à l'utilisation d'un liquide comme de l'huile : dilatation, gel.

Pour éviter les inconvénients relatifs, d'une part, aux dispositifs anti-résonants à amplification mécanique et, d'autre part, aux dispositifs anti-résonants à amplification hydraulique, la présente invention concerne un dispositif de transmission d'efforts statiques axiaux et de filtrage des excitations vibratoires à amplification mécanique, perfectionné pour réduire son encombrement tout en gardant un rapport d'amplification au moins égal à celui des dispositifs antérieurs du même type.

A cet effet, le dispositif de liaison élastique entre deux pièces pour transmettre de l'une à l'autre les efforts statiques dans l'axe du dispositif et filtrer les vibrations coaxiales entre la première et la seconde pièce, du type comportant des moyens de rappel élastique reliés auxdites première et seconde pièces, et au moins une masse battante disposée à une extrémité d'un bras de levier articulé, au voisinage de son autre extrémité, auxdites première et seconde pièces, est remarquable, selon l'invention, en ce que ledit bras de levier est constitué par au moins deux tronçons articulés l'un à l'autre, le premier tronçon étant articulé auxdites première et seconde pièces au voisinage de son extrémité opposée à celle articulée au second tronçon, et le second tronçon étant articulé, au voisinage de son extrémité articulée au premier tronçon, à la seconde pièce et portant, à son extrémité opposée, ladite masse battante.

Ainsi, le fait de prévoir au moins deux "étages" d'amplification multipliant leurs effets respectifs permet de réduire la longueur totale du bras de levier, pour une même valeur d'amplification, et donc de diminuer l'encombrement du dispositif ou, toutes choses égales par ailleurs, de réduire la valeur de la masse battante.

Avantageusement, lesdits premier et second tronçons sont articulés l'un à l'autre par l'intermédiaire d'une bielle.

Par ailleurs, lesdits premier et second tronçons peuvent être disposés sensiblement dans le prolongement l'un de l'autre. Toutefois, pour encore réduire l'encombrement du dispositif, il est préférable que lesdits premier et second tronçons soient disposés en regard l'un de l'autre, de façon parallèle et espacée.

Selon une réalisation préférée de l'invention, le dispositif comprend un premier élément allongé solidaire de la première pièce chargée statiquement et dynamiquement, et un second élément allongé tubulaire, solidaire de la seconde pièce susceptible de recevoir la charge statique et les excitations vibratoires filtrées, lesdits premier et second éléments allongés étant agencés de façon coaxiale et pouvant coulisser longitudinalement l'un par rapport à l'autre, et lesdits moyens de rappel élastique étant prévus entre eux.

De préférence, ledit premier élément allongé est articulé audit premier tronçon du bras de levier et ledit second élément allongé est articulé, d'une part, audit premier tronçon du bras de levier, à son extrémité éloignée de l'articulation audit second tronçon, et, d'autre part, audit second tronçon.

Selon d'autres caractéristiques avantageuses de l'invention, les moyens de rappel élastique peuvent être constitués soit par une pluralité de rondelles élastiques logées à l'intérieur de deux carters en forme de "cloche", disposés en regard l'un de l'autre, dont l'un est solidaire dudit premier élément allongé et l'autre est solidaire dudit second élément allongé, soit par une sangle s'étendant parallèlement à l'axe longitudinal des premier et second éléments allongés en formant une boucle fermée en passant sur deux bobines, dont l'une est fixée sur ledit premier élément allongé et l'autre sur ledit second élément allongé. En particulier, ladite sangle peut être réalisée en un matériau à base de fibres de verre enrobées de résine synthétique notamment thermodurcie, ou agglomérées par celle-ci.

Pour assurer le guidage desdits éléments allongés, des membranes de guidage, souples axialement et rigides radialement, et solidaires, chacune, desdits premier et second éléments allongés peuvent être prévues entre lesdits premier et second éléments allongés. De préférence, des pièces annulaires sont prévues entre lesdits premier et second éléments allongés, pour continuer d'assurer le centrage desdits éléments en cas de rupture desdites membranes.

Par ailleurs, au moins une desdites pièces annulaires peut être réglable en hauteur grâce à un filetage prévu sur sa périphérie externe, et un écrou peut être prévu à l'extrémité, intérieure au second élément allongé, du premier élément allongé, ledit écrou étant susceptible de venir en butée contre un épaulement correspondant du second élément allongé.

Selon d'autres caractéristiques avantageuses de l'invention, l'articulation entre le second élément allongé et le premier tronçon du bras de levier est constituée par une lame souple fixée audit second élément allongé et audit premier tronçon, et parallèle à l'axe longitudinal dudit dispositif, ou, en variante, par une biellette dont les extrémités sont articulées respectivement sur le second élément allongé et sur ledit premier tronçon, tandis que les articulations entre le premier élément allongé et le premier tronçon du bras de levier, et entre le premier tronçon et la bielle sont constituées, chacune, par un axe monté sur paliers lamifiés, et les articulations entre le second tronçon du bras de levier et la bielle, et entre le second élément allongé et le second tronçon sont constituées, chacune, par un axe monté sur roulements à aiguilles et/ou à billes.

Les figures du dessin annexé feront bien comprendre comment l'invention peut être réalisée. Sur ces figures, des références identiques désignent des éléments semblables.

Les figures 1 et 2 sont des schémas de principe illustrant deux variantes du dispositif selon l'invention.

La figur 3 est une coupe longitudinale d'un premier exemple de réalisation du dispositif de l'invention.

La figure 4 est une coupe selon la ligne IV-IV de la figure 3.

Les figures 5,6 et 7 sont différentes sections transversales selon les lignes V-V, VI-VI et VII-VII, respectivement, du dispositif de la figure 3.

La figure 8 est une vue semblable à la figure 3 illustrant le fonctionnement de ce premier exemple de réalisation du dispositif de l'invention.

La figure 9 est une coupe longitudinale d'un second exemple de réalisation du dispositif de l'invention.

La figure 10 est une coupe selon la ligne X-X de la figure 9.

Les figures 11,12 et 13 sont différentes sections transversales selon les lignes XI-XI, XII-XII et XIII-XIII, respectivement, du dispositif de la figure 9.

La figure 14 est une vue semblable à la figure 9 illustrant le fonctionnement de ce second exemple de réalisation du dispositif de l'invention.

La figure 15 montre l'agencement de dispositifs de l'invention entre la boîte de transmission principale et le fuselage d'un hélicoptère.

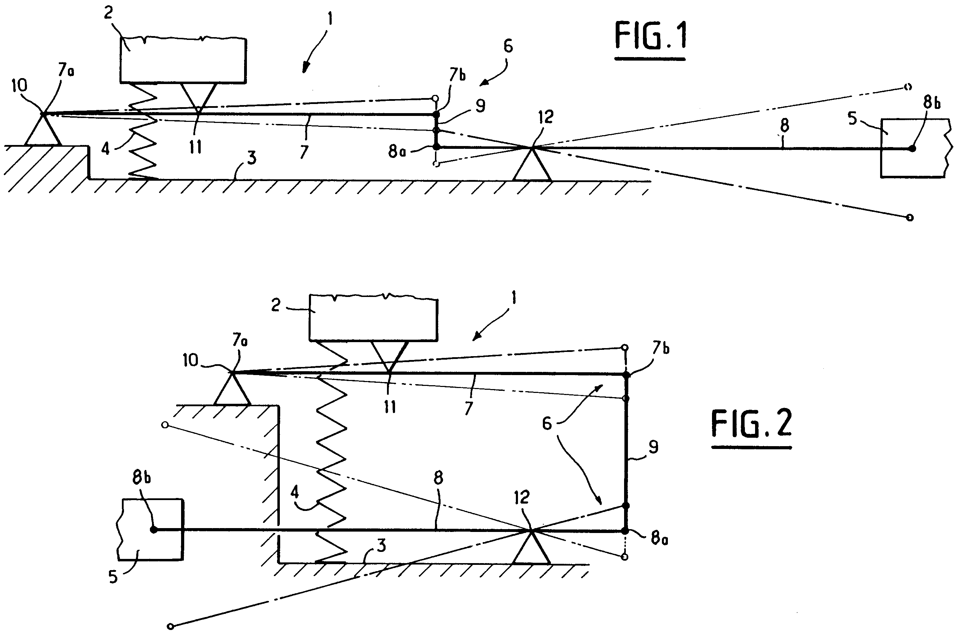

Sur les figures 1 et 2, on a représenté des schémas de principe de deux variantes du dispositif selon l'invention.

Sur ces deux figures, le dispositif 1 pour transmettre des efforts statiques et filtrer des excitations vibratoires entre des première 2 et seconde 3 pièces comporte des moyens de rappel élastique 4, et une masse 5 disposée à une extrémité d'un bras de levier 6 articulé, au voisinage de son autre extrémité, auxdites première 2 et seconde 3 pièces.

Plus particulièrement, selon l'invention, le bras de levier 6 comprend deux tronçons 7,8 articulés l'un à l'autre par l'intermédiaire d'une bielle 9, comme illustré. De plus, le premier tronçon 7 est articulé en 10 et 11 aux pièces 3 et 2, respectivement, au voisinage de son extrémité 7a opposée à celle 7b articulée au second tronçon 8, tandis que ce dernier est articulé, au voisinage de son extrémité 8a articulée au premier tronçon 7, à la seconde pièce 3 en 12 et porte, à son extrémité opposée 8b, la masse 5.

Comme illustré par la figure 1, les premier et second tronçons 7,8 du bras de levier 6 peuvent s'étendre sensiblement dans le prolongement l'un de l'autre, tout au moins lorsque le dispositif 1 n'est pas soumis à des vibrations. Comme on le verra plus en détail par la suite, cet agencement permet de réduire déjà l'encombrement du bras de levier, par rapport à un bras de levier en une pièce, pour un rapport d'amplification identique. Toutefois, pour encore réduire cet encombrement, il est avantageux, comme l'illustre la figure 2, que lesdits premier et second tronçons 7,8 du bras de levier 6 s'étendent en regard l'un de l'autre, de façon parallèle et espacée. On notera que les tronçons 7,8 ne sont bien sûr parallèles que dans la condition de repos du dispositif 1.

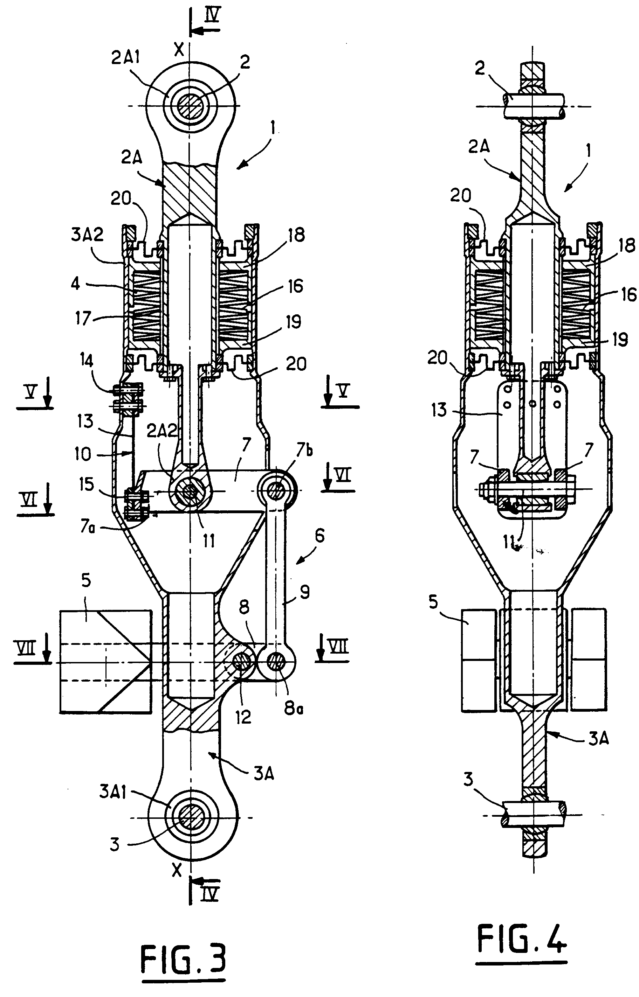

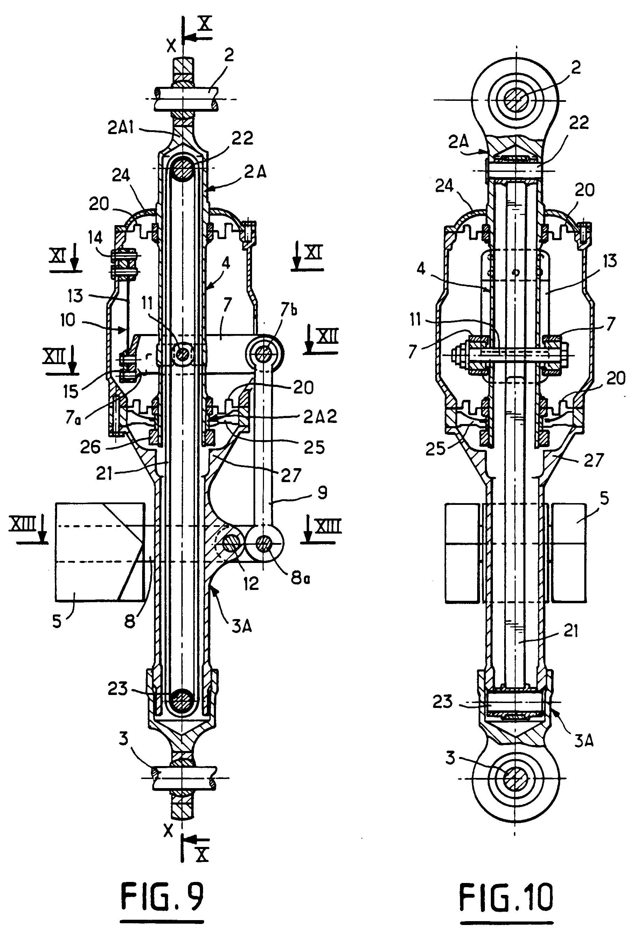

On fera maintenant référence aux figures 3-8 et 9-14 illustrant deux exemples concrets de réalisation du dispositif 1 de l'invention, et sur lesquelles on retrouve les différents éléments décrits en référence aux figures 1 et 2 dans l'agencement schématisé sur la figure 2, tels que les tronçons 7,8 du bras de levier 6, la bielle 9 et les différentes articulations 10,11,12 et 7b,8a, ainsi que la masse 5 et les moyens de rappel élastique 4. Dans ces deux exemples, le dispositif 1 comprend un premier élément allongé 2A s'étendant parallèlement à l'axe longitudinal X-X du dispositif 1, solidaire d'une première pièce 2 (dont seul l'axe de liaison au dispositif 1 est illustré) à une première extrémité 2A1, et articulé en 11 au tronçon 7 du bras de levier 6, à son extrémité 2A2 (figure 3) ou au voisinage de celle-ci (figure 9). De plus, un second élément allongé tubulaire 3A solidaire de la seconde pièce 3 à une première extrémité 3A1 entoure partiellement le premier élément 2A. Lesdits premier et second éléments 2A et 3A sont agencés de façon coaxiale et peuvent coulisser longitudinalement l'un par rapport à l'autre parallèlement à l'axe X-X, lesdits moyens de rappel élastique 4 étant prévus entre eux. Par ailleurs, l'élément 3A est articulé au tronçon 8 du bras de levier 6 en 12 et au tronçon 7 du bras de levier 6 en 10 par l'intermédiaire d'une lame souple 13 fixée en 14 à la partie médiane de l'élément 3A et en 15 à l'extrémité 7a du tronçon 7, la lame souple 13 s'étendant parallèlement à l'axe longitudinal X-X, cette lame souple pouvant être remplacée par une biellette articulée sur les mêmes éléments.

Dans le cas de la première réalisation (figures 3-8), les moyens de rappel élastique 4 sont constitués par une pluralité de rondelles élastiques 16 centrées sur une entretoise 17 et logées à l'intérieur de deux carters en forme de "cloche", disposés en regard l'un de l'autre, dont l'un 18 est solidaire de l'élément 3A et l'autre 19 est solidaire de l'élément 2A. Un mouvement entre les pièces 2 et 3 se traduit donc par une compression (ou une traction) des rondelles élastiques 16, comme on peut le voir notamment sur la figure 8.

Par ailleurs, pour assurer le guidage des parties mobiles, deux membranes 20, réalisées par exemple en titane, souples axialement et rigides radialement sont montées de part et d'autre, respectivement, de l'ensemble des rondelles élastiques 16 et de leurs carters 18,19, en étant solidaires, chacune, des éléments 2A et 3A.

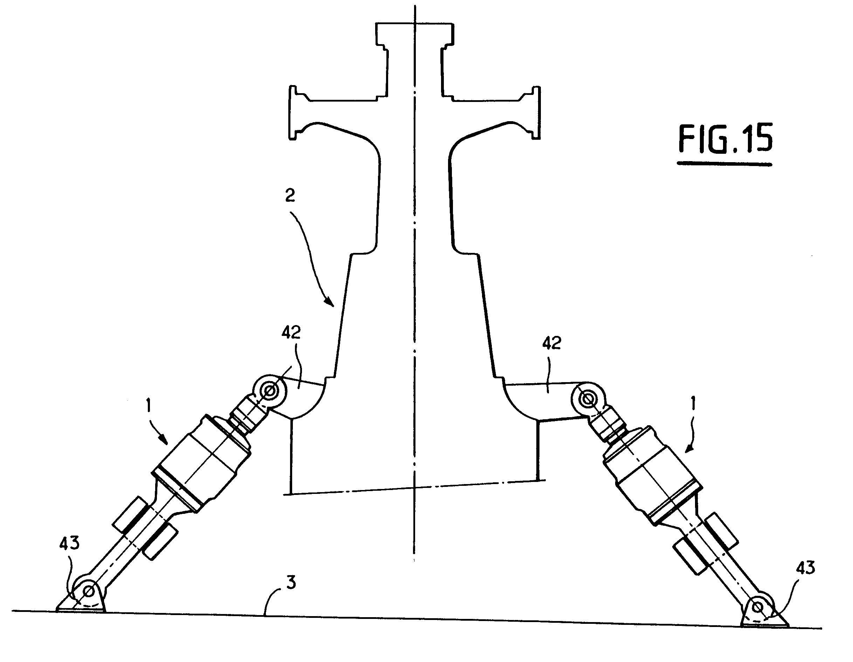

Dans le cas de la seconde réalisation illustrée par les figures 9-14, les moyens de rappel élastique 4 sont constitués par une sangle 21, qui peut être réalisée en un matériau à base de fibres de verre enrobées de résine synthétique notamment thermodurcie, s'étendant parallèlement à l'axe longitudinal X-X en formant une boucle fermée en passant sur deux bobines 22,23, dont l'une 22 est fixée sur l'élément 2A solidaire de la pièce 2 et l'autre 23 est fixée sur l'élément 3A solidaire de la pièce 3. Une traction entre les pièces 2 et 3 se traduit par une traction de la sangle 21. On notera toutefois que la fonction raideur (ressort) est essentiellement assurée pour une traction de la sangle, ce qui s'explique par l'utilisation de fibres de verre dont la direction générale est parallèle à l'axe longitudinal X-X. En compression, la raideur est proche de zéro. Cela ne pose cependant pas de problème particulier, notamment pour l'application spécifique décrite ci-après en référence à la figure 15.

Comme dans l'exemple précédent de réalisation (figures 3-8), les deux membranes 20 assurent le guidage des parties mobiles. Cependant, dans ce cas, des pièces annulaires 24,25 sont prévues pour continuer d'assurer le centrage des parties mobiles en cas de rupture des membranes 20. On pourrait bien sûr envisager de prévoir également de telles pièces 24,25 dans la première réalisation.

Par ailleurs, pour garantir le maintien de la longueur nominale de l'ensemble, tout en conservant une tension dans les fibres de verre, on peut prévoir un réglage de longueur à l'une des extrémités de la sangle. De plus, les butées de fin de course sont assurées par la pièce annulaire 25, réglable en hauteur grâce à un filetage prévu sur sa périphérie externe. Dans le cas de la compression, la butée se fait entre l'écrou 26 à l'extrémité de l'élément 2A et l'épaulement 27 correspondant de l'élément 3A.

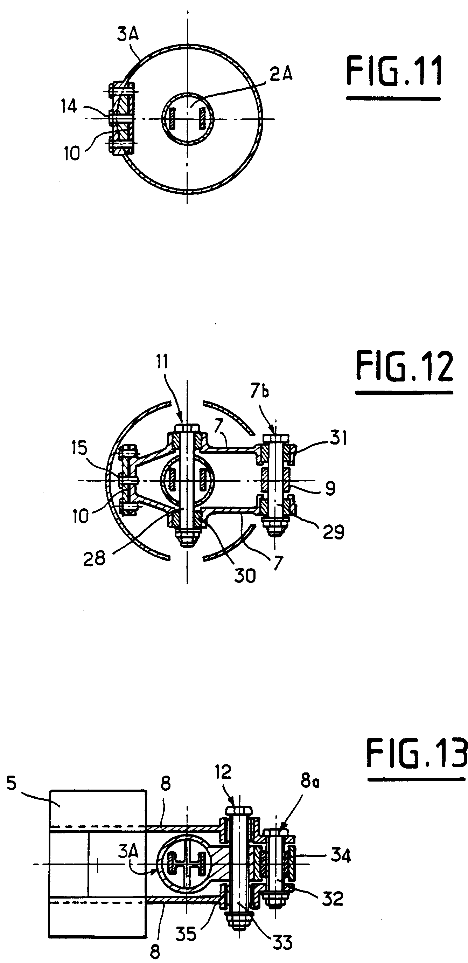

Comme exemple d'amplification pour le dispositif de l'invention, on se réfèrera de nouveau aux figures 1 et 2, sur lesquelles on a représenté en traits mixtes le débattement de la masse 5 correspondant à un rapport d'amplification de 10. Cela est obtenu par un rapport de 2,5 sur le premier "étage" d'amplification (premier tronçon 7 du bras de levier 6) et de 4 sur le second (second tronçon 8 du bras de levier 6). La répartition des taux d'amplification entre les premier et second étages est effectuée en tenant compte de l'encombrement minimal de l'ensemble et des contraintes liées au montage des pièces, notamment. On voit que, dans l'exemple illustré et toutes choses égales par ailleurs, un rapport d'amplification de 10 exigerait, dans le cas d'un bras de levier en une seule pièce, une longueur de celui-ci égale à 410 mm. Dans le cas de la figure 1, cet "encombrement" n'est plus que 225 mm, et il est bien entendu encore plus réduit dans le cas de la figure 2. Les figures 8 et 14 illustrent de même le fonctionnement du dispositif de l'invention pour les exemples plus spécifiques illustrés, et en particulier le débattement de la masse 5 et le mouvement des tronçons 7 et 8 de bras de levier en traction et en compression. Une fenêtre 40 est prévue à cet effet dans la partie médiane correspondante de l'élément 3A.

Comme déjà indiqué, pour l'articulation 10, et compte tenu du faible angle de rotation (7° au maximum) et du léger déplacement radial (0,1 mm au maximum) que doit subir cette articulation, on peut avantageusement utiliser, comme illustré, une lame souple notamment en titane, dont les caractéristiques spécifiques (longueur, largeur, épaisseur notamment) dépendent de l'application envisagée.

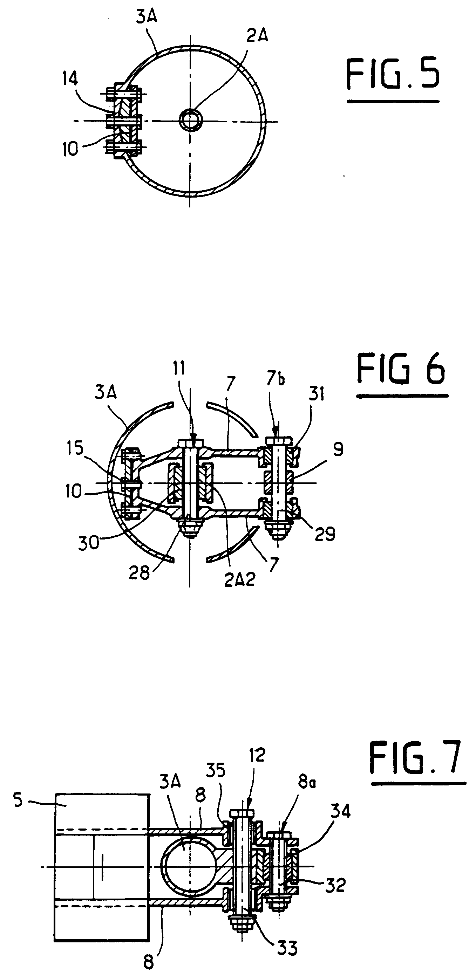

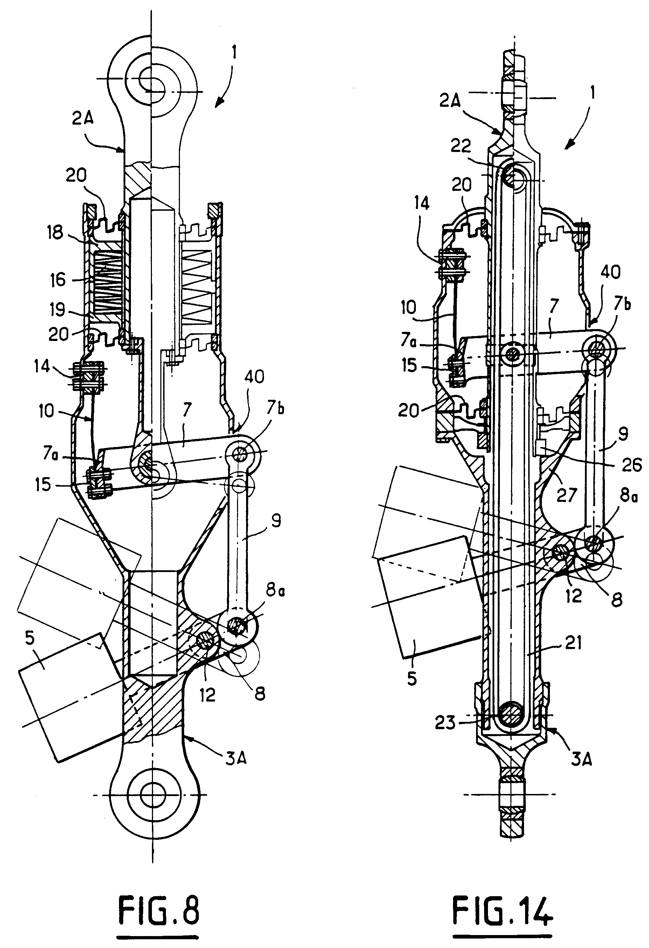

Pour les articulations 11 et 7b, compte tenu du faible angle de rotation (7° au maximum), de la grande rigidité radiale, et de l'absence de jeu et de frottement que doivent présenter ces articulations, on peut avantageusement utiliser, comme illustré plus particulièrement sur les figures 6 et 12, des axes 28,29, respectivement, montés sur paliers lamifiés 30,31. Comme précédemment, les caractéristiques spécifiques, notamment des paliers lamifiés, dépendent de l'application envisagée.

Pour les articulations 8a et 12, compte tenu de l'angle de rotation important (environ 30° au maximum), on peut avantageusement utiliser, comme illustré sur les figures 7 et 13, des axes 32,33, respectivement, montés sur roulements à aiguilles 34 (axes 32) ou roulements combinés à aiguilles et billes 35 (axes 33). De même, les caractéristiques spécifiques des roulements dépendent de l'application envisagée.

On remarquera également, sur les figures 6,7 et 12,13, la structure en double barre, utilisée dans ces exemples de réalisation, des tronçons 7 et 8 de bras de levier.

Un exemple d'installation de dispositifs 1 selon l'invention est illustré sur la figure 15. Dans ce cas, chaque dispositif 1 est disposé entre la boîte de transmission principale 2 d'un hélicoptère et le fuselage 3 de celui-ci, et quatre tels dispositifs identiques peuvent être prévus pour transmettre entre la boîte de transmission principale et la structure du fuselage les efforts et moments statiques et filtrer les excitations dynamiques générées par le rotor sustentateur et propulseur de l'hélicoptère. Chaque dispositif 1 est fixé à la boîte de transmission principale 2 et au fuselage 3 par l'intermédiaire des chapes respectives 42 et 43.

## Revendications

1. Dispositif (1) de liaison élastique entre deux pièces (2,3) pour transmettre de l'une à l'autre les efforts statiques dans l'axe du dispositif et filtrer les vibrations coaxiales entre la première (2) et la seconde (3) pièce, du type comportant des moyens de rappel élastique (4) reliés à la première (2) et à la seconde (3) pièce, et au moins une masse battante (5) disposée à une extrémité (8b) d'un bras de levier (6) articulé, au voisinage de son autre extrémité (7a), auxdites première (2) et seconde (3) pièces,
caractérisé en ce que ledit bras de levier (6) est constitué par au moins deux tronçons (7,8) articulés l'un à l'autre, le premier tronçon (7) étant articulé auxdites première (2) et seconde (3) pièces au voisinage de son extrémité (7a) opposée à celle (7b) articulée au second tronçon (8), et le second tronçon (8) étant articulé, au voisinage de son extrémité (8a) articulée au premier tronçon (7), à la seconde pièce (3) et portant, à son extrémité opposée (8b), ladite masse battante (5).

2. Dispositif selon la revendication 1,
caractérisé en ce que lesdits premier (7) et second (8) tronçons sont articulés l'un à l'autre par l'intermédiaire d'une bielle (9).

3. Dispositif selon la revendication 1 ou la revendication 2,
caractérisé en ce que lesdits premier (7) et second (8) tronçons sont disposés sensiblement dans le prolongement l'un de l'autre.

4. Dispositif selon la revendication 1 ou la revendication 2,
caractérisé en ce que lesdits premier (7) et second (8) tronçons sont disposés en regard l'un de l'autre, de façon parallèle et espacée.

5. Dispositif selon l'une quelconque des revendications 1 à 4,
caractérisé en ce qu'il comprend un premier élément allongé (2A) solidaire de la première pièce (2) chargée statiquement et dynamiquement, et un second élément allongé tubulaire (3A), solidaire de la seconde pièce (3) susceptible de recevoir la charge statique et les excitations vibratoires filtrées, lesdits premier (2A) et second (3A) éléments allongés étant agencés de façon coaxiale et pouvant coulisser longitudinalement l'un par rapport à l'autre, et lesdits moyens de rappel élastique (4) étant prévus entre eux.

6. Dispositif selon la revendication 5,
caractérisé en ce que ledit premier élément allongé (2A) est articulé audit premier tronçon (7) du bras de levier (6) et ledit second élément allongé (3A) est articulé, d'une part, audit premier tronçon (7) du bras de levier (6), à son extrémité (7a) éloignée de l'articulation audit second tronçon (8), et, d'autre part, audit second tronçon (8).

7. Dispositif selon la revendication 5 ou la revendication 6,
caractérisé en ce que lesdits moyens de rappel élastique (4) sont constitués par une pluralité de rondelles élastiques (16) logées à l'intérieur de deux carters (18,19) en forme de "cloche", disposés en regard l'un de l'autre, dont l'un (19) est solidaire dudit premier élément allongé (2A) et l'autre (18) est solidaire dudit second élément allongé (3A).

8. Dispositif selon la revendication 5 ou la revendication 6,
caractérisé en ce que lesdits moyens de rappel élastique (4) sont constitués par une sangle (21) s'étendant parallèlement à l'axe longitudinal (X-X) des premier (2A) et second (3A) éléments allongés en formant une boucle fermée en passant sur deux bobines (22,23), dont l'une (22) est fixée sur ledit premier élément allongé (2A) et l'autre (23) sur ledit second élément allongé (3A).

9. Dispositif selon la revendication 8,
caractérisé en ce que ladite sangle (21) est réalisée en un matériau à base de fibres de verre agglomérées par de la résine synthétique notamment thermodurcie.

10. Dispositif selon l'une quelconque des revendications 5 à 9,
caractérisé en ce que des membranes de guidage (20), souples axialement et rigides radialement, et solidaires, chacune, desdits premier (2A) et second (3A) éléments allongés sont prévues entre lesdits premier (2A) et second (3A) éléments allongés.

11. Dispositif selon la revendication 10,
caractérisé en ce que des pièces annulaires (24,25) sont prévues entre lesdits premier (2A) et second (3A) éléments allongés, pour continuer d'assurer le centrage desdits éléments en cas de rupture desdites membranes.

12. Dispositif selon la revendication 11,
caractérisé en ce qu'au moins une (25) desdites pièces annulaires est réglable en hauteur grâce à un filetage prévu sur sa périphérie externe.

13. Dispositif selon l'une quelconque des revendications 8 à 12,
caractérisé en ce qu'un écrou (26) est prévu à l'extrémité (2A2), intérieure au second élément allongé (3A), du premier élément allongé (2A), ledit écrou (26) étant susceptible de venir en butée contre un épaulement correspondant (27) du second élément allongé (3A).

14. Dispositif selon l'une quelconque des revendications 6 à 13,
caractérisé en ce que l'articulation (10) entre le second élément allongé (3A) et le premier tronçon (7) du bras de levier (6) est constituée par une lame souple (13) fixée audit second élément allongé et audit premier tronçon, et parallèle à l'axe longitudinal (X-X) dudit dispositif.

15. Dispositif selon l'une quelconque des revendications 6 à 13,
caractérisé en ce que l'articulation (10) entre le second élément allongé (3A) et le premier tronçon (7) du bras de levier (6) est constituée par une biellette parallèle à l'axe longitudinal X-X dudit dispositif et dont les extrémités sont articulées, respectivement, sur ledit second élément allongé et sur ledit premier tronçon.

16. Dispositif selon l'une quelconque des revendications 6 à 15,
caractérisé en ce que les articulations (11,7b) entre le premier élément allongé (2A) et le premier tronçon (7) du bras de levier (6), et entre le premier tronçon (7) et la bielle (9) sont constituées, chacune, par un axe (28,29) monté sur paliers lamifiés (30,31).

17. Dispositif selon l'une quelconque des revendications 6 à 16,
caractérisé en ce que les articulations (8a,12) entre le second tronçon (8) du bras de levier (6) et la bielle (9), et entre le second élément allongé (3A) et le second tronçon (8) sont constituées, chacune, par un axe (32,33) monté sur roulements à aiguilles et/ou à billes (34,35).

## Claims

1. Device (1) for elastic connection between two components (2, 3) in order to transmit the static forces from one to the other in the axis of the device and to filter the coaxial vibrations between the first (2) and the second (3) component, of the type comprising elastic return means (4) connected to the first (2) and to the second (3) component and at least one swinging mass (5) located at one end (8b) of a lever arm (6) articulated, in the vicinity of its other end (7a), on said first (2) and second (3) components, characterized in that said lever arm (6) consists of at least two portions (7, 8) articulated on one another, the first portion (7) being articulated on said first (2) and second (3) components in the vicinity of its end (7a) opposite that (7b) articulated on the second portion (8), and the second portion (8) being articulated, in the vicinity of its end (8a) articulated on the first portion (7), on the second component (3) and carrying said swinging mass (5) at its opposite end (8b).

2. Device according to Claim 1, characterized in that said first (7) and second (8) portions are articulated on one another by means of a connecting rod (9).

3. Device according to Claim 1 or Claim 2, characterized in that said first (7) and second (8) portions are arranged substantially in the extension of one another.

4. Device according to Claim 1 or Claim 2, characterized in that said first (7) and second (8) portions are arranged opposite one another in parallel and in a spaced manner.

5. Device according to any one of Claims 1 to 4, characterized in that it comprises a first elongate element (2A) fixed to the first component (2) subjected to a static and dynamic load and a second tubular elongate element (3A) fixed to the second component (3) liable to receive the static load and the filtered vibratory excitations, said first (2A) and second (3A) elongate elements being arranged coaxially and being capable of sliding longitudinally relative to one another, and said elastic return means (4) being provided between them.

6. Device according to Claim 5, characterized in that said first elongate element (2A) is articulated on said first portion (7) of the lever arm (6), and said second elongate element (3A) is articulated, on the one hand, on said first portion (7) of the lever arm (6) at its end (7a) remote from the articulation on said second portion (8) and, on the other hand, on said second portion (8).

7. Device according to Claim 5 or Claim 6, characterized in that said elastic return means (4) consist of a plurality of elastic washers (16) seated on the inside of two "bell"-shaped housings (18, 19) which are located opposite one another and of which one (19) is fixed to said first elongate element (2A) and the other (18) is fixed to said second elongate element (3A).

8. Device according to Claim 5 or Claim 6, characterized in that said elastic return means (4) consist of a band (21) extending parallel to the longitudinal axis (X-X) of the first (2A) and second (3A) elongate elements, at the same time forming a closed loop by passing over two spools (22, 23), of which one (22) is fastened to said first elongate element (2A) and the other (23) to said second elongate element (3A).

9. Device according to Claim 8, characterized in that said band (21) is produced from a material based on glass fibres agglomerated by synthetic resin, especially thermoset.

10. Device according to any one of Claims 5 to 9, characterized in that axially flexible and radially rigid guide diaphragms (20), each fixed to said first (2A) and second (3A) elongate elements, are provided between said first (2A) and second (3A) elongate elements.

11. Device according to Claim 10, characterized in that annular pieces (24, 25) are provided between said first (2A) and second (3A) elongate elements, so as to continue to ensure the centring of said elements in the event of a breakage of said diaphragms.

12. Device according to Claim 11, characterized in that at least one (25) of said annular pieces is vertically adjustable by means of a thread provided on its outer periphery.

13. Device according to any one of Claims 8 to 12, characterized in that a nut (26) is provided at the end (2A2), internal to the second elongate element (3A), of the first elongate element (2A), said nut (26) being capable of coming into abutment against a corresponding shoulder (27) of the second elongate element (3A).

14. Device according to any one of Claims 6 to 13, characterized in that the articulation (10) between the second elongate element (3A) and the first portion (7) of the lever arm (6) consists of a flexible blade (13) fastened to said second elongate element and to said first portion and parallel to the longitudinal axis (X-X) of said device.

15. Device according to any one of Claims 6 to 13, characterized in that the articulation (10) between the second elongate element (3A) and the first portion (7) of the lever arm (6) consists of a link which is parallel to the longitudinal axis (X-X) of said device and the ends of which are articulated, respectively, on said second elongate element and on said first portion.

16. Device according to any one of Claims 6 to 15, characterized in that the articulations (11, 7b) between the first elongate element (2A) and the first portion (7) of the lever arm (6) and between the first portion (7) and the connecting rod (9) each consist of an axle (28, 29) mounted on laminated bearings (30, 31).

17. Device according to any one of Claims 6 to 16, characterized in that the articulations (8a, 12) between the second portion (8) of the lever arm (6) and the connecting rod (9) and between the second elongate element (3A) and the second portion (8) each consist of an axle (32, 33) mounted on needle and/or ball bearings (34, 35).

## Patentansprüche

1. Vorrichtung (1) zur elastischen Verbindung zwischen zwei Teilen (2,3), um zwischen denselben die statischen Kräfte in der Achse der Vorrichtung zu übertragen und die koaxialen Schwingungen zwischen dem ersten Teil (2) und dem zweiten Teil (3) zu dämpfen, mit elastischen Rückholmitteln (4), die mit dem ersten Teil (2) und mit dem zweiten Teil (3) verbunden sind, und mindestens einer Schlagmasse (5), die an einem Ende (8b) eines Hebelarms (6) angeordnet ist, der in der Nähe seines anderen Endes (7a) an das erste Teil (2) und an das zweite Teil (3) angelenkt ist, dadurch gekennzeichnet, daß der Hebelarm (6) aus mindestens zwei Abschnitten (7,8) besteht, die aneinander angelenkt sind, wobei der erste Abschnitt (7) an das erste Teil (2) und an das zweite Teil (3) in der Nähe seines Endes (7a), das dem an den zweiten Abschnitt (8) angelenkten Ende (7b) entgegengesetzt ist, angelenkt ist und der zweite Abschnitt (8) in der Nähe seines Endes (8a), das an den ersten Abschnitt (7) angelenkt ist, an das zweite Teil (3) angelenkt ist und an seinem entgegengesetzten Ende (8b) die Schlagmasse (5) umfaßt.

2. Vorrichtung nach Anspruch 1,
dadurch gekennzeichnet, daß der erste Abschnitt (7) und der zweite Abschnitt (8) aneinander über eine Pleuelstange (9) angelenkt sind.

3. Vorrichtung nach Anspruch 1 oder Anspruch 2,
dadurch gekennzeichnet, daß der erste Abschnitt (7) und der zweite Abschnitt (8) annähernd in Verlängerung zueinander angeordnet sind.

4. Vorrichtung nach Anspruch 1 oder Anspruch 2,
dadurch gekennzeichnet, daß der erste Abschnitt (7) und der zweite Abschnitt (8) einander gegenüber und parallel mit einem Abstand zueinander angeordnet sind.

5. Vorrichtung nach einem der Ansprüche 1 bis 4,
dadurch gekennzeichnet, daß sie ein erstes längliches Element (2A), das mit dem ersten statisch und dynamisch belasteten Teil (2) verbunden ist, und ein zweites röhrenförmiges längliches Element (3A) hat, das mit dem zweiten Teil (3) zur Aufnahme der statischen Belastung und der gedämpften Erregungsschwingungen verbunden ist, wobei das erste längliche Element (2A) und das zweite längliche Element (3A) koaxial angeordnet sind und sich in Längsrichtung gegeneinander verschieben können, und zwischen denselben elastische Rückholmittel (4) vorgesehen sind.

6. Vorrichtung nach Anspruch 5,
dadurch gekennzeichnet, daß das erste längliche Element (2A) an den ersten Abschnitt (7) von Hebelarm (6) angelenkt ist, und daß das zweite längliche Element (3A) einerseits an den ersten Abschnitt (7) von Hebelarm (6) an dessen vom Gelenk zum zweiten Abschnitt (8) abgelegenen Ende (7a) und andererseits an den zweiten Abschnitt (8) angelenkt ist.

7. Vorrichtung nach Anspruch 5 oder Anspruch 6,
dadurch gekennzeichnet, daß die elastischen Rückholmittel (4) aus einer Vielzahl von Federscheiben (16) in zwei einander gegenüberliegenden "glockenförmigen" Gehäusen (18,19) bestehen, von denen ein Gehäuse (19) mit dem ersten länglichen Element (2A) und das andere Gehäuse (18) mit dem zweiten länglichen Element (3A) verbunden ist.

8. Vorrichtung nach Anspruch 5 oder Anspruch 6,
dadurch gekennzeichnet, daß die elastischen Rückholmittel (4) aus einem Riemen (21) parallel zur Längsachse (X-X) des ersten länglichen Elements (2A) und des zweiten länglichen Elements (3A) bestehen, wobei dieser über zwei Rollen (22,23) verlaufend einen geschlossenen Kreis bildet und eine Rolle (22) am ersten länglichen Element (2A) und die andere Rolle (23) am zweiten länglichen Element (3A) befestigt ist.

9. Vorrichtung nach Anspruch 8,
dadurch gekennzeichnet, daß der Riemen (21) aus einem Material auf der Grundlage von Glasfasern besteht, die vorzugsweise durch ein warmhärtendes Kunstharz miteinander verbunden sind.

10. Vorrichtung nach einem der Ansprüche 5 bis 9,
dadurch gekennzeichnet, daß zwischen dem ersten länglichen Element (2A) und dem zweiten länglichen Element (3A) axial flexible und radial starre Führungsmembranen (20) vorgesehen sind, die jeweils mit dem ersten länglichen Element (2A) und dem zweiten länglichen Element (3A) verbunden sind.

11. Vorrichtung nach Anspruch 10,
dadurch gekennzeichnet, daß zwischen dem ersten länglichen Element (2A) und dem zweiten länglichen Element (3A) ringförmige Teile (24,25) vorgesehen sind, um bei einem Reißen der Membranen die Zentrierung der genannten Elemente weiterhin zu gewährleisten.

12. Vorrichtung nach Anspruch 11,
dadurch gekennzeichnet, daß mindestens ein ringförmiges Teil (25) durch ein Gewinde an seinem äußeren Umfang in der Höhe verstellbar ist.

13. Vorrichtung nach einem der Ansprüche 8 bis 12,
dadurch gekennzeichnet, daß an dem innerhalb des zweiten länglichen Elements (3A) verlaufenden Ende (2A2) des ersten länglichen Elements (2A) eine Mutter (26) vorgesehen ist, die an einem entsprechenden Ansatz (27) des zweiten länglichen Elements (3A) zum Anschlag kommen kann.

14. Vorrichtung nach einem der Ansprüche 6 bis 13,
dadurch gekennzeichnet, daß das Gelenk (10) zwischen dem zweiten länglichen Element (3A) und dem ersten Abschnitt (7) von Hebelarm (6) aus einem Federblatt (13) besteht, das am zweiten länglichen Element und am ersten Abschnitt befestigt ist und parallel zur Längsachse (X-X) der Vorrichtung verläuft.

15. Vorrichtung nach einem der Ansprüche 6 bis 13,
dadurch gekennzeichnet, daß das Gelenk (10) zwischen dem zweiten länglichen Element (3A) und dem ersten Abschnitt (7) von Hebelarm (6) aus einem Schwingarm parallel zur Längsachse X-X der Vorrichtung besteht, dessen Enden am zweiten länglichen Element und am ersten Abschnitt angelenkt sind.

16. Vorrichtung nach einem der Ansprüche 6 bis 15,
dadurch gekennzeichnet, daß die Gelenke (11,7b) zwischen dem ersten länglichen Element (2A) und dem ersten Abschnitt (7) von Hebelarm (6) und zwischen dem ersten Abschnitt (7) und Pleuelstange (9) jeweils aus einem Bolzen (28,29) bestehen, der in Schichtstofflagern (30,31) gelagert ist.

17. Vorrichtung nach einem der Ansprüche 6 bis 16,
dadurch gekennzeichnet, daß die Gelenke (8a,12) zwischen dem zweiten Abschnitt (8) von Hebelarm (6) und Pleuelstange (9) und zwischen dem zweiten länglichen Element (3A) und dem zweiten Abschnitt (8) jeweils aus einem Bolzen (32,33) bestehen, der in Nadel- und/oder Kugellagern (34,35) gelagert ist.
